(19) **Europäisches Patentamt**

**European Patent Office**

**Office européen des brevets**

(11) **EP 1 180 505 B1**

(12) **EUROPEAN PATENT SPECIFICATION**

(45) Date of publication and mention
of the grant of the patent:
**28.04.2004  Bulletin 2004/18**

(51) Int Cl.⁷: **C04B 28/02**
// (C04B28/02, 22:00, 22:14),
C04B103:10

(21) Application number: **00117022.4**

(22) Date of filing: **08.08.2000**

(54) **Set accelerating agent, spraying material and spraying method employing it**

Abbindebeschleuniger, Sprühmaterial und Verfahren das dieses Material verwendet

Accélérateur de la prise, matériau pour pulvérisation et procédé utilisant celui-ci

(84) Designated Contracting States:
**AT CH DE FR IT LI**

(43) Date of publication of application:
**20.02.2002  Bulletin 2002/08**

(73) Proprietor: **DENKI KAGAKU KOGYO KABUSHIKI KAISHA**
**Chiyoda-ku Tokyo (JP)**

(72) Inventors:
 • **Terashima, Isao, c/o Denki Kagaku Kogyo K. K.**
 **Nishi-Kubiki-gun, Niigata (JP)**
 • **Ishida, Atsumu, c/o Denki Kagaku Kogyo K. K.**
 **Nishi-Kubiki-gun, Niigata (JP)**
 • **Usui, Eiichi, c/o Denki Kagaku Kogyo K. K.**
 **Nishi-Kubiki-gun, Niigata (JP)**
 • **Iwasaki, Masahiro, c/o Denki Kagaku Kogyo K. K.**
 **Nishi-Kubiki-gun, Niigata (JP)**
 • **Watanabe, Akira, c/o Denki Kagaku Kogyo K. K.**
 **Nishi-Kubiki-gun, Niigata (JP)**

(74) Representative:
**Wächtershäuser, Günter, Prof. Dr. et al**
**Wächtershäuser & Hartz**
**Patentanwälte**
**Weinstrasse 8**
**80333 München (DE)**

(56) References cited:
 **EP-A- 0 769 482          EP-A- 0 807 613**
 **JP-A- 11 180 745**

 • **PATENT ABSTRACTS OF JAPAN vol. 014, no. 382 (C-0749), 17 August 1990 (1990-08-17) & JP 02 141449 A (DENKI KAGAKU KOGYO KK), 30 May 1990 (1990-05-30)**
 • **DATABASE WPI Section Ch, Week 199020 Derwent Publications Ltd., London, GB; Class L02, AN 1990-152310 XP002160157 & JP 02 097445 A (DENKI KAGAKU KOGYO KK), 10 April 1990 (1990-04-10)**

Remarks:
The file contains technical information submitted after the application was filed and not included in this specification

EP 1 180 505 B1

**Description**

The present invention relates to a spraying material to be sprayed on an exposed ground surface on a road or a railroad, or in a tunnel such as a channel, a spraying method employing it, and the use of an accelerating agent for the preparation of the spraying material. For the purpose of the present invention, a cement concrete is used as a general term which covers a paste, mortar and concrete.

Heretofore, it has been common to employ a method of spraying a quick setting concrete having an accelerating agent mixed to concrete, to prevent falling of the ground exposed, for example, by excavation of a tunnel (JP-8-60-4149).

This method is usually a method wherein cement, aggregate and water are mixed in a measuring and mixing plant installed at the excavation site, to prepare a spraying concrete, which is transported by an agitator car and pressure injected by a concrete pump to mix it with an accelerating agent pressure-injected separately, in a converging tube provided at an intermediate position of pathway, to obtain a quick setting spraying concrete, which is then sprayed on the ground surface until the thickness reaches a predetermined level.

As an accelerating agent to be used here, calcium aluminate and/or an alkali metal aluminate, or a mixture thereof with an alkali metal carbonate, has been known (JP-A-64-15351, JP-B-56-27457, JP-A-61-26538 and JP-A-63-210050).

Patent Abstracts of Japan, vol. 1999, no. 12, October 29, 1999, and JP-A-11-180745 disclose a spraying material, an accelerating agent, and a method of spraying concrete, wherein the spraying material comprises water, a calcium aluminate and a sulfate.

EP-A-0 807 613 discloses a spraying material, an accelerating agent, and a method of spraying concrete, wherein the accelerating agent comprises calcium aluminosilicate glass and aluminum sulfate as effective components.

Patent Abstracts of Japan, vol. 014, no. 382, August 17, 1990 and JP-A-02-141449 disclose a cement admixture containing calcium aluminate, $Al_2(SO_4)_3$ and $Na_2SO_4$ and/or $K_2SO_4$.

DATABASE WPI Section Ch, Week 199020 Derwent Publications Ltd., London, GB; Class L02, AN 1990-152310 XP002160157 & JP-A-02-097445 disclose a liner material for a piping.

Recently, an alkali-aggregate reaction-suppressing type accelerating agent containing aluminum sulfate has been known to improve the long-term strength or to be useful for a permanent structure which can be used for a long period of time. As such an alkali-aggregate reaction-suppressing type accelerating agent containing aluminum sulfate, a mixture of calcium aluminate and hydrous aluminum sulfate having water of crystallization, has been proposed (JP-A-8-48553).

However, when conventional accelerating agents are used, there has been a problem that the rebound ratio during spraying is large, or the long-term strength is hardly obtainable.

Further, in a case where the mixture of calcium aluminate and hydrous aluminum sulfate, is used, there has been a problem that the initial strength is low, and particularly when the temperature is low, the initial strength tends to be very low, and is susceptible to the influence of the water cement ratio.

The present inventors have conducted various studies on the above problems and as a result, have found it possible to solve the above problems by using a certain specific spraying material. The present invention has been accomplished on the basis of this discovery.

Namely, the present invention uses an accelerating agent which comprises a calcium aluminate, aluminum sulfate and an alkali metal sulfate, and provides a method of spraying concrete according to claim 1 and a spraying material according to claim 4, preferably such a spraying material wherein the alkali metal sulfate is from 10 to 30 parts by weight per 100 parts by weight of the accelerating agent, such a spraying material wherein $CaO/Al_2O_3$ (molar ratio) of the calcium aluminate is from 1.5 to 3.0, such a spraying material whereby the accelerating agent slurry further contains an aromatic sulfonic acid and/or an aromatic sulfonate-formaldehyde condensate, such a spraying material whereby the accelerating agent slurry has a pH of less than 7, and such a spraying material wherein the vitrification ratio of the calcium aluminate is at least 40%.

Further, the present invention provides such a spraying material wherein the cement concrete further contains a polyalkylene oxide, and such a spraying material which further contains a fibrous material.

Furthermore, the spraying method comprises pressure-injecting an accelerating agent slurry by compressed air to mix it with a cement concrete.

Now, the present invention will be described in detail.

The accelerating agent to be used in the present invention, comprises a calcium aluminate, aluminum sulfate and an alkali metal sulfate.

A calcium aluminate to be used in the present invention, is a general term for a substance comprising CaO and $Al_2O_3$ as the main components and having a hydration activity, which is obtainable by mixing a material containing calcia and a material containing alumina, followed by heat treatment such as calcination in a kiln or melting in an electric furnace, and it is a compound wherein a part of CaO and/or $Al_2O_3$ is substituted by e.g. an alkali metal oxide, an alkaline earth metal oxide, silicon oxide, titanium oxide, iron oxide, an alkali metal halide, an alkaline earth metal halide, an alkali metal sulfate or an alkaline earth metal sulfate, or a substance having such a compound solid-solubilized in a small amount in a substance comprising CaO and $Al_2O_3$ as the main components. From the viewpoint of mineral morphology, it may be crystalline or amorphous.

Among them, calcium aluminate is preferred from the viewpoint of the reactivity. More preferred is a mixture containing amorphous calcium aluminate obtained by quenching a heat-treated product corresponding to a composition of $12CaO \cdot 7Al_2O_3$ (hereinafter referred to as $C_{12}A_7$).

The vitrification ratio of the calcium aluminate is preferably at least 40%, more preferably at least 60%, further preferably at least 80%, most preferably 100%, with a view to accelerating the initial setting, improving the initial strength and reducing the rebound ratio. If it is less than 40%, the setting property or development of the strength tends to be impaired, and the rebound ratio tends to increase.

Here, the vitrification ratio is one obtained by a method wherein a calcium aluminate of the present invention is heated at $1,000°C$ for two hours and then gradually cooled at a cooling rate of $5 °C/min$, whereby area $S_0$ of the main peak of crystal mineral is obtained by a powder X-ray refraction method, and the vitrification ratio x is obtained by the following formula (1) from this $S_0$ and the main peak area S of the crystal of the calcium aluminate in the sample of the present invention:

$$x \ (\%) = 100 \times (1 - S/S_0)$$ Formula (1)

$CaO/Al_2O_3$ (molar ratio) of the calcium aluminate is usually from 1.5 to 3.0, preferably from 1.7 to 2.5, with a view to accelerating the initial setting, improving development of the initial strength and reducing the rebound ratio. If it is less than 1.5, the setting property or development of the initial strength tends to be impaired, and the rebound ratio tends to be large. On the other hand, if it exceeds 3.0, the setting property or development of the strength tends to be impaired, and the rebound ratio tends to be large, such being economically undesirable.

The particle size of the calcium aluminate is preferably at a level with a Blaine value of at least 4,000 $cm^2/g$, more preferably at least 5,000 $cm^2/g$ from the viewpoint of the quick setting property or development of the initial strength. If it is less than 4,000 $cm^2/g$, the quick setting property or development of the initial strength tends to be poor.

Aluminum sulfate to be used in the present invention is a component to accelerate the initial setting and to reduce the rebound ratio, and it contributes to an improvement in development of the initial strength in such a manner that in the process of hydration reaction of cement, it supplies aluminum ions which react with calcium ions from the cement or from the calcium aluminate to form a calcium aluminate hydrate and further react with sulfate ions to form a calcium sulfoaluminate hydrate at an early stage.

The aluminum sulfate may be used either in the form of an anhydride or a hydrate, and the anhydride and the hydrate may be used in combination. Among them, the hydrate is preferred, as it is more effective for accelerating the initial setting, reducing the rebound ratio and improving development of the initial strength.

The amount of the aluminum sulfate is preferably from 5 to 100 parts by weight, more preferably from 10 to 45 parts by weight, most preferably from 10 to 40 parts by weight, per 100 parts by weight of the calcium aluminate, as calculated as the anhydride. If it is less than 5 parts by weight, the rebound ratio tends to be large, and the initial setting tends to be poor, and if it exceeds 100 parts by weight, development of the long-term strength tends to be impaired.

An alkali metal sulfate to be used in the present invention is a component to improve development of the initial strength.

As the alkali metal sulfate, sodium sulfate, potassium sulfate, sodium hydrogensulfate, sodium sulfite, potassium alum, chrome alum and iron alum may, for example, be mentioned. Among them, one or more members selected from the group consisting of sodium sulfate, potassium sulfate and potassium alum, are preferred, since the setting property or development of the initial strength is thereby good, and sodium sulfate and/or potassium sulfate is more preferred, and sodium sulfate is most preferred.

The alkali metal sulfate may be used in the form of an anhydride or a hydrate, and the anhydride and the hydrate may be used in combination. Among them, the anhydride is preferred from the viewpoint of stability.

The amount of the alkali metal sulfate is preferably from 10 to 30 parts by weight, more preferably from 15 to 20 parts by weight, per 100 parts by weight of the accelerating agent comprising the calcium aluminate, the aluminum sulfate and the alkali metal sulfate. If it is less than 10 parts by weight, the rebound ratio tends to be large, development of the initial strength tends to be impaired, and in a case where the accelerating agent is a slurry, the pressure-injection property of the quick setting cement concrete tends to be poor, and if it exceeds 30 parts by weight, the setting property or development of the long-term strength tends to be impaired.

The accelerating agent may be used in combination with gypsum or a setting promoter for the purpose of improving the initial setting or development of the strength.

In the present invention , an accelerating agent comprising the calcium aluminate, the aluminum sulfate and the alkali metal sulfate is used with a view to reducing the rebound ratio and improving development of the strength. With a view to reducing the rebound ratio or dust, water (hereinafter referred to as slurry water) is mixed to obtain the accelerating agent slurry used in the method of claim 1.

In the accelerating agent slurry, the pH of the accelerating agent slurry is usually less than 7, preferably at least 3 and less than 7, more preferably from 4 to 6, in order to accelerate the initial setting, to improve development of the initial strength or the pressure-injection property of the accelerating agent slurry or to reduce the rebound ratio. If it is less than 3, the setting property or development of the initial strength tends to be impaired, and the rebound ratio tends to be large, and if it is 7 or higher, the pressure-injection property tends to be poor, development of the long-term strength tends to be impaired, and the rebound ratio tends to be large. Here, the pH of the accelerating agent slurry for the purpose of the present invention, is the pH of a diluted product having the accelerating agent slurry further diluted ten times with water.

The amount of the slurry water is from 30 to 600 parts by weight, more preferably from 50 to 80 parts by weight, per 100 parts by weight of the accelerating agent. If it is less than 30 parts by weight, the amount of dust may not be reduced, and if it exceeds 600 parts by weight, development of the strength tends to be poor.

In order to improve the properties of the cement concrete, a setting retarder, a thickener and an ultrafine powder may be combined to the slurry water. Further, the aluminum sulfate or the alkali metal sulfate may be used as dissolved in the slurry water.

On the other hand, when a powdery accelerating agent is used as the accelerating agent, there is a merit that the operation is easy, since a step of wetting or slurrying the accelerating agent, is not required.

The amount of the accelerating agent is preferably from 2 to 25 parts by weight, more preferably from 5 to 20 parts by weight, most preferably from 7 to 15 parts by weight, as calculated as the solid content, per 100 parts by weight of the cement. If it is less than 2 parts by weight, it tends to be difficult to accelerate the initial setting, and if it exceeds 25 parts by weight, development of the long-term strength tends to be impaired.

The cement to be used in the present invention may, for example, be commonly commercially available various Portland cements such as normal, high early strength, ultra-high early strength and moderate heat Portland cements, and various mixed cements having blast furnace slag or fly ash mixed to such Portland cements, and they may be finely pulverized for use. Among them, normal Portland cement and/or high early strength Portland cement is preferred, since the pressure-injection property of the cement concrete will thereby be good.

Further, in the present invention, it is preferred to use a polyalkylene oxide on the cement concrete side with a view to reducing the rebound ratio or the amount of dust.

The polyalkylene oxide (hereinafter referred to as PAO) to be used in the present invention is one which gives viscosity to the cement concrete to prevent sagging of the cement concrete from the sprayed surface immediately after the spraying or to reduce the rebound ratio or the amount of dust. The polyalkylene oxide may, for example, be polyethylene oxide, polypropylene oxide or polybutylene oxide. Among them, polyethylene oxide is preferred, as it is more effective for giving viscosity to the cement concrete and reducing the rebound ratio or the amount of dust during the spraying.

The molecular weight of PAO is preferably from 1,000,000 to 5,000,000. If it is less than 1,000,000, the viscosity of the cement concrete tends to be small, whereby sagging of the cement concrete from the sprayed surface immediately after the spraying may not be prevented. If it exceeds 5,000,000, development of the strength tends to be impaired, and in a case where the accelerating agent is a slurry, the pressure-injection property of the quick setting cement concrete prepared by mixing the accelerating agent with the cement concrete, tends to be poor.

The amount of PAO is preferably from 0.001 to 0.2 parts by weight, more preferably from 0.005 to 0.1 parts by weight, per 100 parts by weight of the cement. If it is less than 0.001 parts by weight, the viscosity of the quick setting cement concrete tends to be small, whereby the amount of the dust tends to be large, and the rebound ratio tends to be large. If it exceeds 0.2 parts by weight, the viscosity of the cement concrete or the rebound ratio tends to be large, and the amount of dust tends to be large, and in a case where the accelerating agent is a slurry, the pressure-injection property of the quick setting cement concrete tends to be poor.

Further, in the present invention, for the purpose of reducing the rebound ratio or the amount of dust, it is preferred to use an aromatic sulfonic acid and/or an aromatic sulfonate-formaldehyde condensate on the accelerating agent side.

The aromatic sulfonic acid and/or the aromatic sulfonate-formaldehyde condensate (hereinafter referred to generally as the aromatic sulfonate) to be used in the present invention is one which improves the fluidity of the cement concrete or the dispersibility of the accelerating agent, improves adhesion of the quick setting cement concrete at the time of spraying and reduces the rebound ratio or the amount of dust, and it may be used in the form of either a liquid or a powder. Further, if it reacts with the polyalkylene oxide in the cement concrete to increase the viscosity, adhesion of the quick setting cement concrete at the time of spraying will be improved, and the effect of reducing the rebound ratio or the amount of dust will be increased. The aromatic sulfonates, may for example, be an aromatic sulfonic acid such as naphthalenesulfonic acid, an alkylnaphthalene sulfonate, bisphenol A sulfonic acid, phenolsulfonic acid, trisphenolsulfonic acid, 4-phenoxybenzene-4'-sulfonic acid, methyldiphenylethersulfonic acid or anthracenesulfonic acid and a formaldehyde condensate of such an aromatic sulfonic acid. Further, the aromatic ring may have an alkyl group. Among them, an aromatic sulfonate-formaldehyde condensate is preferred, since it is more effective for improving the fluidity of the cement concrete or the dispersibility of the accelerating agent, improving adhesion of the quick setting cement concrete at the time of spraying, and reducing the rebound ratio or the amount of dust. One or more selected from the group consisting of a naphthalenesulfonate-formaldehyde condensate, an alkylnaphthalenesulfonate-formaldehyde condensate and a bisphenol A sulfonate-formaldehyde condensate, are more preferred, and a β-naphthalenesulfonate-formaldehyde condensate (hereinafter referred to as β-NS) is most preferred.

The amount of the aromatic sulfonate is preferably from 0.05 to 5 parts by weight, more preferably from 0.1 to 3 parts by weight, per 100 parts by weight of the accelerating agent comprising the calcium aluminate, the aluminum sulfate and the alkali metal sulfate. If it is less than 0.05 parts by weight, the effects for improving the fluidity of the cement concrete or the dispersibility of the accelerating agent, for improving adhesion of the quick setting cement concrete at the time of spraying and for reducing the rebound ratio or the amount of dust, tend to be poor, and if it exceeds 5 parts by weight, the rebound ratio tends to be large, the amount of dust tends to be large, and development of the strength tends to be impaired.

Further, in the present invention, it is preferred to use a fibrous material for the quick setting cement concrete with a view to improving the bending strength, impact resistance and toughness of the quick setting cement concrete. The fibrous material to be used in the present invention may be inorganic or organic. As an inorganic fibrous material, glass fiber, rock wool, asbestos, ceramic fiber or metal fiber may, for example, be mentioned, and as an organic fibrous material, vinylon fiber, polyethylene fiber, polypropylene fiber, polyacryl fiber, cellulose fiber, polyvinyl alcohol fiber, polyamide fiber, pulp, hemp, wood-wool or wood chips may, for example, be mentioned. Further, carbon fiber may be employed. Among them, metal fiber and/or vinylon fiber is preferred from the viewpoint of economical efficiency.

The length of the fibrous material is preferably at most 50 mm, more preferably at most 30 mm, from the viewpoint of the pressure-injection property or blendability. If it exceeds 50 mm, the pressure-injection pipe is likely to clog during pressure-injection.

The amount of the fibrous material is preferably from 0.1 to 1.5 parts by volume, more preferably from 0.3 to 1.2 parts by volume, per 100 parts by volume of the cement concrete containing the fibrous material. If it is less than 0.1 part by weight, the bending strength, impact strength and toughness may not be improved, and if it exceeds 1.5 parts by volume, the pressure-injection property of the quick setting cement concrete tends to be poor, and the impact resistance or development of the strength tends to be impaired.

In the present invention, an AE agent or a foaming agent may be added to incorporate air bubbles thereby to reduce the.amount of dust.

The amount of water in the cement concrete is preferably from 35 to 65 parts by weight, more preferably from 40 to 55 parts by weight, per 100 parts by weight of the cement. If it is less than 35 parts by weight, the cement concrete may not sufficiently mixed, and if it exceeds 65 parts by weight, development of the strength tends to be poor. Here, "water" does not include the slurry water.

Aggregate to be used in the present invention is not particularly limited so long as it is sprayable. However, one having high aggregate strength is preferred. As fine aggregate, river sand, pit sand, lime sand or silica sand may, for example, be employed, and as coarse aggregate, river gravel, pit gravel or lime gravel may, for example, be employed.

According to the spraying method to be used in the present invention, spraying may be carried out in the form of a quickly setting cement concrete from the viewpoint of the required physical properties, economical efficiency and operation efficiency.

As a spraying method in a case where the accelerating agent is not slurried, it is preferred to employ a spraying method wherein a cement concrete and a powdery accelerating agent are separately injected under pressure to combine and mix the powdery accelerating agent with the cement concrete to form a quick setting cement concrete, which is then sprayed.

As a spraying method in a case where an accelerating agent slurry is used according to the present invention, it is preferred to employ a spraying method wherein a cement concrete and an accelerating agent are separately injected, and water is added to the accelerating agent immediately before combining and mixing the cement concrete and the accelerating agent, to form an accelerating agent slurry, and this accelerating agent slurry is combined and mixed with the cement concrete to form a quickly setting cement concrete, which is then sprayed. Here, a wet spraying method or a dry spraying method may be employed. Among them, a wet spraying method is preferred, since the amount of dust is thereby small.

As a wet spraying method in a case where an accelerating agent slurry is used, a spraying method may be mentioned wherein cement, aggregate and water are mixed and kneaded and transported under air pressure, and immediately before adding an accelerating agent, water is added to the accelerating agent to obtain an accelerating agent slurry, which is then added from one branch of a Y branched tube, followed by spraying.

As a dry spraying method in a case where an accelerating agent slurry is used, a method may, for example, be mentioned wherein cement and aggregate are mixed and transported under air pressure, and an accelerating agent slurry obtained by the same method as in the wet spraying method and water are added thereto, followed by spraying.

Thus, the accelerating agent is slurried and mixed to the cement concrete, whereby the amount of dust or the rebound ratio can be reduced, and the working environment can be improved.

The method of slurrying the accelerating agent is not particularly limited. However, it is preferred to employ, for example, a method wherein water is added under high pressure from holes formed at several portions around one branch of a Y branched tube for transporting the accelerating agent under air pressure, to form a slurry. This high pressure water also has an effect of injecting the accelerating agent slurry into the cement concrete, whereby the blending performance will be good. The reactivity with the cement concrete will thereby be increased, the amount of dust or the rebound ratio can be reduced, the setting property or development of the strength will be improved, and further, the quality of the quick setting spraying cement concrete will be stabilized.

In the spraying method of the present invention, conventional spraying installation, etc., may be used. The spraying installation is not particularly limited so long as spraying can adequately be carried out. For example, for pressure-injection of a cement concrete, "Ariber 280", tradename, manufactured by Ariber Company may, for example, be employed, and for pressure-injection of the accelerating agent, an accelerating agent pressure-injection apparatus "Natmcrete" by Chiyoda Manufactory Co. may, for example, be used. To add water to the accelerating agent to form an accelerating agent slurry, a conventional water pump may be employed, and a method of introducing compressed air during addition of water, may also be employed. The pressure for pressure-injection of the cement concrete is preferably larger than from 0.2 to 0.6 MPa. Further, the pressure of compressed air to inject the accelerating agent under pressure, is preferably larger by from 0.01 to 0.3 MPa than the pressure for pressure-injection of the cement concrete.

Further, the pressure-injection rate of the quickly setting cement concrete is preferably from 4 to 20 $m^3$/hr. Further, in order to facilitate mixing of the accelerating agent and the cement concrete, the shape of the tube or the internal wall of the tube at the converging point of the accelerating agent and the cement concrete may be made to have a spiral structure or a structure for a turbulent flow.

Now, the present invention will be described in detail with reference to Test Examples. However, it should be understood that the present invention is.by no means restricted by such specific Test Examples.

TEST EXAMPLE 1

A spraying concrete was prepared so that unit amounts of the respective materials were such that cement was 500 kg/$m^3$, water was 200 kg/$m^3$, fine aggregate was 1,173 kg/$m^3$ and coarse aggregate was 510 kg/$m^3$, and further, PAO was added in an amount of 0.02 part by weight per 100 parts by weight of the cement, and a fibrous material was added in an amount of 1.0 part by volume per 100 parts by volume of the spraying concrete containing the fibrous material. The spraying concrete was pressure-injected by a concrete pressure-injecting machine "Ariber 280" at a pressure-injection rate of 4 $m^3$/hr under a injection pressure of 0.4 MPa.

On the other hand, a powdery accelerating agent was prepared by mixing 100 parts by weight of a calcium aluminate, aluminum sulfate in an amount shown by parts by weight in Table 1 as calculated as an anhydride, 18 parts by weight of an alkali metal sulfate per 100 parts by weight of the accelerating agent comprising the calcium aluminate ①, the aluminum sulfate and the alkali metal sulfate, and 2 parts by weight of an aromatic sulfonate α per 100 parts by weight of the accelerating agent. The powdery accelerating agent was pressure-injected by compressed air so that it would be 10 parts by weight per 100 parts by weight of the cement.

Such an accelerating agent was pressure-injected under an injection pressure of 0.5 MPa and mixed with the spraying concrete to obtain a quickly setting spraying concrete. This quickly setting spraying, concrete was evaluated. The results are shown in Table 1.

Materials used

Cement: Normal Portland cement, commercial product, Blaine value: 3,200 $cm^2$/g, specific gravity: 3.16

Fine aggregate: River sand produced in Himekawa, Niigata-ken, Japan, surface water content: 4.0%, specific gravity: 2.62

Coarse aggregate: River gravel produced in Himekawa, Niigata-ken, Japan, surface dried condition, specific gravity: 2.64, maximum size: 10 mm

PAO: Polyethylene oxide, molecular weight: 200,000, commercial product

Fibrous material: Steel fiber, length: 30 mm, specific gravity: 7.8, commercial product

Calcium aluminate ① : Calcium aluminate, mainly corresponding to a composition comprising $C_{12}A_7$, amorphous, Blaine value: 6,000 cm$^2$/g, calcia material and alumina material were mixed in a predetermined ratio, melted by a high frequency induction furnace, then quenched to have a vitrification ratio of 100%, followed by pulverization, $CaO/Al_2O_3$ (molar ratio) = 2.0

Aluminum sulfate: Hydrous aluminum sulfate, commercial product

Alkali metal sulfate: Sodium sulfate, anhydride, commercial product

Aromatic sulfonate $\alpha$ : $\beta$ -NS, powdery, commercial product

Measuring methods

Setting time: Mortar was kneaded employing a material having coarse aggregate omitted from the spraying concrete, and setting time was measured in accordance with "Quality Standard for Accelerating Agents for Spraying Concrete (JSCED-102)".

Compression strength: Measured at 20°C. The prepared quickly setting spraying concrete was sprayed to a pullout formwork of 25 cm in width × 25 cm in length and to a formwork of 50 cm in width × 50 cm in length × 20 cm in thickness. The initial strength upon expiration of 3 hours was measured by using a test sample of the pullout formwork. A pin was covered with the quickly setting spraying concrete from the front surface of the pullout formwork, and the pin was pulled out from the rear side of the formwork, whereby the pulling out strength was obtained. The compression strength was calculated by the formula:

$$\text{Compression strength} = \text{pulling out strength} \times$$

$$4/\text{surface area of the test sample}$$

Upon expiration of one day or more, a test sample of 5 cm in diameter × 10 cm in length sampled from the formwork of 50 cm in width × 50 cm in length × 20 cm in thickness, was used, and the test sample was measured by a 20 ton pressure resistant machine.

Rebound ratio: The quickly setting spraying concrete was sprayed to a simulated tunnel having a height of 3.5 m and a width of 2.5 m, prepared by an iron plate in the form of an arch, at a pressure-injection rate of 4 m$^3$/hr for 10 minutes. Thereafter, the rebound ratio was calculated by the following formula:

$$\text{Rebound ratio} = \text{weight of the quickly setting}$$

$$\text{spraying concrete falling without depositing on the}$$

$$\text{simulated tunnel/weight of the quickly setting}$$

$$\text{spraying concrete sprayed to the simulated tunnel} \times$$

$$100(\%).$$

Table 1

| Test Example No. | Aluminum sulfate* | Setting time (min) | | Compression strength (N/mm$^2$) | | | Rebound ratio (%) | Notes** |
|---|---|---|---|---|---|---|---|---|
| | | Start | End | 3hr | 1day | 28days | | |
| 1-1 | 0 | 5 | 22 | 1.8 | 14.2 | 52.5 | 22.1 | Comp. Ex. |
| 1-2 | 5 | 2 | 7 | 2.8 | 16.8 | 53.8 | 16.8 | Ref. Ex. |
| 1-3 | 10 | <1 | 4 | 3.2 | 20.4 | 53.7 | 13.1 | Ref. Ex. |
| 1-4 | 25 | <1 | 2 | 4.8 | 23.1 | 53.9 | 12.0 | Ref. Ex. |

*Aluminum sulfate indicates the amount by parts by weight per 100 parts by weight of the calcium aluminate, as . calculated as an anhydride.

**Comp. Ex. represents a Comparative Example, and Ref. Ex. represents a Reference Example

Table 1 (continued)

| Test Example No. | Aluminum sulfate* | Setting time (min) | | Compression strength (N/mm$^2$) | | | Rebound ratio (%) | Notes** |
|---|---|---|---|---|---|---|---|---|
| | | Start | End | 3hr | 1day | 28days | | |
| 1-5 | 40 | <1 | 3 | 4.6 | 20.6 | 53.4 | 12.6 | Ref. Ex. |
| 1-6 | 45 | <1 | 3 | 4.6 | 19.8 | 52.3 | 10.9 | Ref. Ex. |
| 1-7 | 100 | <1 | 5 | 4.2 | 17.6 | 49.0 | 14.5 | Ref. Ex. |

*Aluminum sulfate indicates the amount by parts by weight per 100 parts by weight of the calcium aluminate, as . calculated as an anhydride.

**Comp. Ex. represents a Comparative Example, and Ref. Ex. represents a Reference Example

TEST EXAMPLE 2

The test and evaluation were carried out in the same manner as in Test Example 1 except that a powdery accelerating agent was employed which was prepared by mixing 100 parts by weight of the calcium aluminate as identified in Table 2, 25 parts by weight of aluminum sulfate as calculated as an anhydride, 18 parts by weight of an alkali metal sulfate per 100 parts by weight of the accelerating agent comprising the calcium aluminate, the aluminum sulfate and the alkali metal sulfate, and 2 parts by weight of the aromatic sulfonate $\alpha$ per 100 parts by weight of the accelerating agent. The results are shown in Table 2.

Materials used

Calcium aluminate ② : Mainly corresponding to a composition comprising $C_{12}A_7$, Blain value: 6,000 cm$^2$/g, calcia material and alumina material were mixed in a predetermined ratio, melted by a high frequency induction furnace and then annealed to have a vitrification ratio of 40%, followed by pulverization, CaO/Al$_2$O$_3$ (molar ratio) = 2.0

Calcium aluminate ③ : Mainly corresponding to a composition comprising $C_{12}A_7$, Blain value: 6,000 cm$^2$/g, calcia material and alumina material were mixed in a predetermined ratio, melted by a high frequency induction furnace and then annealed to have a vitrification ratio of 60%, followed by pulverization, CaO/Al$_2$O$_3$ (molar ratio) = 2.0

Calcium aluminate ④ : Mainly corresponding to a composition comprising $C_{12}A_7$, Blain value: 6,000 cm$^2$/g, calcia material and alumina material were mixed in a predetermined ratio, melted by a high frequency induction furnace and then quenched to have a vitrification ratio of 80%, followed by pulverization, CaO/Al$_2$O$_3$ (molar ratio) = 2.0

Table 2

| Test Example No. | Calcium aluminate | Setting time (min) | | Compression strength (N/mm$^2$) | | | Rebound ratio (%) | Notes** |
|---|---|---|---|---|---|---|---|---|
| | | Start | End | 3hr | 1day | 28days | | |
| 2-1 | ② | <1 | 4 | 3.0 | 15.9 | 52.2 | 14.7 | Ref. Ex. |
| 2-2 | ③ | <1 | 3 | 3.5 | 19.2 | 53.0 | 13.5 | Ref. Ex. |
| 2-3 | ④ | <1 | 3 | 4.2 | 21.3 | 53.8 | 12.8 | Ref. Ex. |
| 1-4 | ① | <1 | 2 | 4.8 | 23.1 | 53.9 | 12.0 | Ref. Ex. |

** Ref. Ex. represents a Reference Example

TEST EXAMPLE 3

The test and evaluation were carried out in the same manner as in Test Example 1 except that a powdery accelerating agent was employed which was prepared by mixing 100 parts by weight of the calcium aluminate as identified in Table 3, 25 parts by weight of aluminum sulfate as calculated as an anhydride, 18 parts by weight of an alkali metal sulfate per 100 parts by weight of the accelerating agent comprising the calcium aluminate, the aluminum sulfate and the alkali metal sulfate, and 2 parts by weight of the aromatic sulfonate $\alpha$ per 100 parts by weight of the accelerating agent. The results are shown in Table 3.

Materials used

Calcium aluminate ⑤ : Calcia material and alumina material were mixed in a predetermined ratio, melted by a high frequency induction furnace and then quenched to have a vitrification ratio of 100%, followed by pulverization, amorphous, Blain value: 6,000 $cm^2/g$, $CaO/Al_2O_3$ (molar ratio) = 1.5

Calcium aluminate ⑥ : Calcia material and alumina material were mixed in a predetermined ratio, melted by a high frequency induction furnace, quenched to have a vitrification ratio of 100%, followed by pulverization, amorphous, Blain value: 6,000 $cm^2/g$, $CaO/Al_2O_3$ (molar ratio) = 1.7

Calcium aluminate ⑦ : Calcia material and alumina material were mixed in a predetermined ratio, melted by a high frequency induction furnace, quenched to have a vitrification ratio of 100%, followed by pulverization, amorphous, Blain value: 6,000 $cm^2/g$, $CaO/Al_2O_3$ (molar ratio) = 2.5

Calcium aluminate ⑧ : Calcia material and alumina material were mixed in a predetermined ratio, melted by a high frequency induction furnace, and then quenched to have a vitrification ratio of 100%, followed by pulverization, amorphous, Blain value: 6,000 $cm^2/g$, $CaO/Al_2O_3$ (molar ratio) = 3.0

Table 3

| Test Example No. | Calcium aluminate | Setting time (min) | | Compression strength (N/mm$^2$) | | | Rebound ratio (%) | Notes** |
|---|---|---|---|---|---|---|---|---|
| | | Start | End | 3hr | 1day | 28days | | |
| 3-1 | ⑤ | 2 | 5 | 2.2 | 18.6 | 54.2 | 15.4 | Ref. Ex. |
| 3-2 | ⑥ | <1 | 3 | 3.1 | 20.0 | 54.0 | 13.9 | Ref. Ex. |
| 1-4 | ① | <1 | 2 | 4.8 | 23.1 | 53.9 | 12.0 | Ref. Ex. |
| 3-3 | ⑦ | <1 | 2 | 4.2 | 22.2 | 53.4 | 12.8 | Ref. Ex. |
| 3-4 | ⑧ | <1 | 3 | 4.0 | 20.4 | 53.1 | 12.9 | Ref. Ex. |

** Ref. Ex. represents a Reference Example

TEST EXAMPLE 4

The test and evaluation were carried out in the same manner as Test Example 1 except that a powdery accelerating agent was employed which was prepared by mixing 100 parts by weight of the calcium aluminate ① , 25 parts by weight of aluminum sulfate as calculated as an anhydride, an alkali metal sulfate in an amount shown by parts by weight in Table 4 per 100 parts by weight of the accelerating agent comprising the calcium aluminate, the aluminum sulfate and the alkali metal sulfate, and 2 parts by weight of the aromatic sulfonate α per 100 parts by weight of the accelerating agent. The results are shown in Table 4.

Table 4

| Test Example No. | Alkali metal sulfate* | Setting time (min) | | Compression strength (N/mm$^2$) | | | Rebound ratio (%) | Notes** |
|---|---|---|---|---|---|---|---|---|
| | | Start | End | 3hr | 1day | 28days | | |
| 4-1 | 0 | 2 | 20 | 1.2 | 10.3 | 53.4 | 18.4 | Comp. Ex. |
| 4-2 | 10 | 2 | 5 | 3.7 | 15.7 | 55.2 | 16.1 | Ref. Ex. |
| 4-3 | 15 | <1 | 4 | 4.4 | 19.3 | 54.7 | 14.3 | Ref. Ex. |
| 1-4 | 18 | <1 | 2 | 4.8 | 23.1 | 53.9 | 12.0 | Ref. Ex. |
| 4-4 | 20 | <1 | 2 | 5.2 | 23.7 | 51.2 | 11.6 | Ref. Ex. |
| 4-5 | 30 | 3 | 5 | 3.2 | 24.5 | 50.1 | 11.5 | Ref. Ex. |

*Alkali metal sulfate indicates the amount by parts by weight per 100 parts by weight of the accelerating agent comprising the calcium aluminate, the aluminum sulfate and the alkali metal sulfate.

**Comp. Ex. represents a Comparative Example, and Ref. Ex. represents a Reference Example

TEST EXAMPLE 5

The test and evaluation were carried out in the same manner as in Test Example 1 except that a powdery accelerating agent was employed which was prepared by mixing 18 parts by weight of an alkali metal sulfate per 100 parts by weight of the accelerating agent comprising aluminum sulfate and the alkali metal sulfate and 2 parts by weight of the aromatic sulfonate $\alpha$ per 100 parts by weight of the accelerating agent, without using a calcium aluminate. The results are shown in Table 5.

Measuring method

Low temperature compression strength: Measured in the same manner as for the compression strength except that it was measured at 10°C.

Table 5

| Test Example No. | Setting time (min) | | Compression strength (N/mm$^2$) | | | Low temperature compression Strength (N/mm$^2$) | | Notes** |
|---|---|---|---|---|---|---|---|---|
| | Start | End | 3hr | 1day | 28days | 1day | 28days | |
| 5-1 | 7 | 45 | 0.9 | 20.7 | 49.6 | 9.3 | 52.1 | Comp. Ex. |
| 1-4 | <1 | 2 | 4.8 | 23.1 | 53.9 | 14.4 | 55.7 | Ref. Ex. |

**Comp. Ex. represents a Comparative Example, and Ref. Ex. represents a Reference Example.

TEST EXAMPLE 6

The test and evaluation were carried out in the same manner as in Test Example 1 except that a powdery accelerating agent was employed which was prepared by mixing 100 parts by weight of the calcium aluminate ① , 25 parts by weight of aluminum sulfate calculated as an anhydride, 18 parts by weight of an alkali metal sulfate per 100 parts by weight of the accelerating agent comprising the calcium aluminate, the aluminum sulfate and the alkali metal sulfate, and the aromatic sulfonate $\alpha$ in an amount shown by parts by weight in Table 6 per 100 parts by weight of the accelerating agent. The results are shown in Table 6.

Materials used

Aromatic sulfonate $\beta$: $\beta$-alkylnaphthalene sulfonate-formaldehyde condensate, powdery, commercial product
Aromatic sulfonate $\gamma$: bisphenol A sulfonate-formaldehyde condensate, powdery, commercial product
Aromatic sulfonate $\delta$ : phenolsulfonic acid, powdery, commercial product

Measuring method

Amount of dust: The quickly setting spraying concrete was sprayed to a simulated tunnel having a height of 3.5 m and a width of 2.5 m, prepared by an iron plate in the form of an arch, at a pressure-injection rate of 4 m$^3$/hr for 10 minutes. Then, the amount of dust was measured at a predetermined position apart three meter from.the spraying site, and an average value of the measured values, was shown.

Table 6

| Test Example No. | Aromatic sulfonate* | Rebound ratio (%) | Amount of dust (mg/m$^3$) | Compression strength (N/mm$^2$) | | | Notes** |
|---|---|---|---|---|---|---|---|
| | | | | 3hr | 1day | 28days | |
| 6-1 | -0 | 19.4 | 5.8 | 5.1 | 23.9 | 55.7 | Ref. Ex. |
| 6-2 | $\alpha$ 0.05 | 16.5 | 3.4 | 5.0 | 23.6 | 55.0 | Ref. Ex. |
| 6-3 | $\alpha$0.1 | 14.1 | 3.1 | 4.9 | 23.3 | 54.5 | Ref. Ex. |
| 1-4 | $\alpha$2.0 | 12.0 | 2.7 | 4.8 | 23.1 | 53.9 | Ref. Ex. |
| 6-4 | $\alpha$3.0 | 11.7 | 2.6 | 3.2 | 29.2 | 50.3 | Ref. Ex. |
| 6-5 | $\alpha$5.0 | 13.5 | 3.3 | 3.1 | 28.1 | 49.0 | Ref. Ex. |

*Aromatic sulfonate indicates the amount by parts by weight per 100 parts by weight of the accelerating agent.

** Ref. Ex. represents a Reference Example

Table 6   (continued)

| Test Example No. | Aromatic sulfonate* | Rebound ratio (%) | Amount of dust (mg/m$^3$) | Compression strength (N/mm$^2$) | | | Notes** |
|---|---|---|---|---|---|---|---|
| | | | | 3hr | 1day | 28days | |
| 6-6 | β2.0 | 15.1 | 3.4 | 4.9 | 23.4 | 54.1 | Ref. Ex. |
| 6-7 | γ2.0 | 14.6 | 3.6 | 4.7 | 23.5 | 54.3 | Ref. Ex. |
| 6-8 | δ2.0 | 16.5 | 4.5 | 3.7 | 21.6 | 52.4 | Ref. Ex. |

*Aromatic sulfonate indicates the amount by parts by weight per 100 parts by weight of the accelerating agent.

** Ref. Ex. represents a Reference Example

TEST EXAMPLE 7

The test and evaluation were carried out in the same manner as in Test Example 1 except that a spraying concrete was prepared to have PAO added in an amount as identified in Table 7 per 100 parts by weight of cement and to have a fibrous material added in an amount of 1.0 part by volume per 100 parts by volume of the spraying concrete containing the fibrous material, and such a spraying concrete was pressure-injected, while a powdery accelerating agent was employed which was prepared by mixing 100 parts by weight of the calcium aluminate ①, 15 parts by weight of aluminum sulfate calculated as an anhydride, 18 parts by weight of. an alkali metal sulfate per 100 parts by weight of the accelerating agent comprising the calcium aluminate, the aluminum sulfate and the alkali metal sulfate, and 2 parts by weight of the aromatic sulfonate α per 100 parts by weight of the accelerating agent. The results are shown in Table 7.

Table 7

| Test Exanple No. | PAO * | Rebound ratio (%) | Amount of dust (mg/m$^3$) | Notes ** |
|---|---|---|---|---|
| 7-1 | 0 | 20.1 | 6.1 | Ref. Ex. |
| 7-2 | 0.001 | 14.6 | 4.4 | Ref. Ex. |
| 7-3 | 0.005 | 13.7 | 3.5 | Ref. Ex. |
| 1-4 | 0.02 | 12.0 | 2.7 | Ref. Ex. |
| 7-4 | 0.1 | 11.0 | 2.1 | Ref. Ex. |
| 7-5 | 0.2 | 13.7 | 3.9 | Ref. Ex. |

*PAO indicates the amount by parts by weight per 100 parts by weight of cement.

** Ref. Ex. represents a Reference Example

TEST EXAMPLE 8

The test and evaluation were carried out in the same manner as in Test Example 1 except that a spraying concrete was prepared to have 0.02 part by weight of PAO added to 100 parts by weight of cement and to have a fibrous material added in an amount as shown in Table 8 per 100 parts by volume of the spraying concrete containing the fibrous material, and such a spraying concrete was pressure-injected, while a powdery accelerating agent was employed which was prepared by mixing 100 parts by weight of the calcium aluminate ①, 25 parts by weight of aluminum sulfate calculated as an anhydride, 18 parts by weight of an alkali metal sulfate per 100 parts by weight of the accelerating agent comprising the calcium aluminate, the aluminum. sulfate and the alkali metal sulfate, and 2 parts by weight of the aromatic sulfonate α per 100 parts by weight of the accelerating agent. The results are shown in Table 8.

Measuring method

Impact resistance: Upon expiration of one hour, the quickly setting spraying concrete was cut out in a size of 20 cm in width × 20 cm in length × 1 cm in thickness, which was placed on standard sand which was adjusted to be flat, and then a spherical body of 200 g was dropped thereto from a height of 50 cm. One which broke within five times of dropping, was identified with ×, one which did not break but was cracked, was identified with Δ, and one which did not break and was not cracked, was identified with ○.

Table 8

| Test Example No. | Fibrous material* | Impact resistance | Notes** |
|---|---|---|---|
| 8-1 | 0 | × | Ref. Ex. |
| 8-2 | 0.1 | Δ | Ref. Ex. |
| 8-3 | 0.3 | ○ | Ref. Ex. |
| 1-4 | 1.0 | ○ | Ref. Ex. |
| 8-4 | 1.2 | ○ | Ref. Ex. |
| 8-5 | 1.5 | Δ | Ref. Ex. |

*Fibrous material indicates the amount by parts by volume per 100 parts by volume of the spraying concrete containing the fibrous material.

** Ref. Ex. represents a Reference Example

TEST EXAMPLE 9

The test and evaluation were carried out in the same manner as in Test Example 1 except that an accelerating agent prepared by mixing 100 parts by weight of the calcium aluminate ① , 25 parts by weight of aluminum sulfate calculated as an anhydride, 18 parts by weight of an alkali metal sulfate per 100 parts by weight of the accelerating agent comprising the calcium aluminate, the aluminum sulfate and the alkali metal sulfate, and 2 parts by weight of the aromatic sulfonate α per 100 parts by weight of the accelerating agent, was pressure-injected by compressed air, and slurry water in an amount shown in Table 9 per 100 parts by weight of the accelerating agent, was added from holes formed at several portions around one branch of a Y branched tube provided in the path way, to form an accelerating agent slurry, this accelerating agent slurry was pressure-injected and mixed to a spraying concrete pressure-injected from another branch of the Y branched tube, to form a quickly setting spraying concrete. The results are shown in Table 9.

Table 9

| Test Example No. | Slurry water* | Compression strength (N/mm$^2$) | | | Amount of dust (%) | Notes** |
|---|---|---|---|---|---|---|
| | | 3hr | (mg/m$^3$) | 28days | | |
| 1-4 | 0 | 4.8 | 23.1 | 53.9 | 2.7 | Ref. Ex. |
| 9-1 | 30 | 3.1 | 20.3 | 48.1 | 1.1 | Ex. |
| 9-2 | 50 | 3.4 | 19.6 | 47.0 | 0.9 | Ex. |
| 9-3 | 70 | 3.7 | 19.2 | 46.4 | 0.8 | Ex. |
| 9-4 | 80 | 3.7 | 19.0 | 45.8 | 0.8 | Ex. |

*Slurry water indicates the amount by parts by weight per 100 parts by weight of the accelerating agent.

** Ref. Ex. represents a Reference Example, and Ex. represents an Example of the present invention

TEST EXAMPLE 10

The test and evaluation were carried out in the same manner as in Test Example 1 except that an accelerating agent prepared by mixing 100 parts by weight of the calcium aluminate ① , 25 parts by weight of aluminum sulfate calculated as an anhydride, 18 parts by weight of an alkali metal sulfate per 100 parts by weight of the accelerating agent comprising the calcium aluminate, the aluminum sulfate and the alkali metal sulfate, and 2 parts by weight of the aromatic sulfonate α per 100 parts by weight of the accelerating agent, was pressure-injected by compressed air, and 70 parts by weight of slurry water per 100 parts by weight of the accelerating agent, was added from holes formed at several portions around one branch of a Y branched tube provided in the path way, to form an accelerating agent slurry, and this accelerating agent slurry was pressure-injected and mixed with a spraying concrete pressure-injected from another branch of the Y branched tube, to form a quickly setting spraying concrete. The results are shown in Table 10.

Measuring methods

pH: The accelerating agent slurry was diluted ten times with water, and the pH of the diluted product was shown.

Pressure-injection property: The spraying concrete was pressure-injected for 20 m by a concrete pump and then mixed with the accelerating agent to form a quickly setting concrete, and this quickly setting concrete was sprayed for 5 minutes. A case where no clogging was observed at the Y branched tube or in the piping was identified with ○, a case where clogging tended to occur, was identified with Δ, and a case where the Y branched tube or the piping was clogged, whereby no more spraying was possible, was identified with ×.

Sagging: The quickly setting spraying concrete was sprayed to a simulated tunnel having a height of 3.5 m and a width of 2.5 m, prepared by an iron plate in the form of an arch at a pressure-injection rate of 4 m$^3$/hr for 10 minutes. Then, a case where the quickly setting spraying concrete did not sag from the side walls of the simulated tunnel was identified with ○, a case where the concrete sagged a little was identified with Δ, and a case where the concrete sagged substantially, was identified with ×.

Table 10

| Test Example No. | Setting time (min) | | Low temperature compression strength (N/mm$^2$) | | pH | Rebound ratio (%) | Pressure injection property | Sagging |
|---|---|---|---|---|---|---|---|---|
| | Start | End | 1day | (%) | | | | |
| 9-3 | <1 | 3 | 19.2 | 46.4 | 5 | 10.4 | ○ | ○ |

As described in the foregoing, by employing the spraying material of the present invention, the rebound ratio at the time of spraying the quickly setting cement concrete, can be reduced. Further, development of high strength can be expected for both initial strength and long-term strength, and the spraying thickness can be made thin. Further, the operation cost can be reduced, and after the spraying, high strength can immediately be obtained, whereby the safety can be improved.

**Claims**

**1.** A method of spraying concrete, which comprises

(A) providing a quickly setting concrete as a spraying material by

(A1) providing an accelerating agent slurry by adding

(a) from 30 to 600 parts by weight of water to
(b) 100 parts by weight of an accelerating agent comprising:

(b1) a calcium aluminate,
(b2) aluminum sulfate, and
(b3) an alkali metal sulfate; and

(A2) pressure-injecting the accelerating agent slurry by compressed air to mix it with a cement concrete; and

(B) spraying the spraying material obtained in step (A).

**2.** The method according to Claim 1, wherein the cement concrete further contains a polyalkylene oxide.

**3.** The method according to Claim 1 or 2, wherein the spraying material further contains a fibrous material.

**4.** A spraying material which comprises a cement concrete containing cement, and an accelerating agent slurry which comprises:

(a) from 30 to 600 parts by weight of water and
(b) 100 parts by weight of an accelerating agent comprising:

(b1) a calcium aluminate,
(b2) aluminum sulfate, and

(b3) an alkali metal sulfate.

5. The spraying material according to Claim 4, wherein the cement concrete further contains a polyalkylene oxide.

6. The spraying material according to Claim 4 or 5, wherein the spraying material further contains a fibrous material.

7. The spraying material according to any one of Claims 4 to 6, wherein the alkali metal sulfate is from 10 to 30 parts by weight per 100 parts by weight of the accelerating agent.

8. The spraying material according to any one of Claims 4 to 7, wherein $CaO/Al_2O_3$ (mol ratio) in the calcium aluminate is from 1.5 to 3.0.

9. The spraying material according to any one of Claims 4 to 8, whereby the accelerating agent slurry further contains an aromatic sulfonic acid and/or an aromatic sulfonate formaldehyde condensate.

10. The spraying material according to Claim 9, whereby the accelerating agent slurry has a pH of less than 7.

11. The spraying material according to any one of Claims 4 to 10, wherein the calcium aluminate has a vitrification ratio of at least 40%.

12. Use of an accelerating agent comprising:

(b1) a calcium aluminate,
(b2) aluminum sulfate, and
(b3) an alkali metal sulfate

for the preparation of the spraying material as defined in any one of Claims 4 to 11.


**Patentansprüche**

1. Verfahren zum Spritzen von Beton, das aufweist

(A) Bereitstellen eines rasch abbindenden Betons als Spritzmaterial durch

(A1) Bereitstellen einer Beschleunigermasse durch Zugabe von

(a) von 30 bis 600 Gew.-Teilen Wasser zu
(b) 100 Gew.-Teilen des Beschleunigungsmittels, das aufweist:

(b1) ein Calciumaluminat,
(b2) Aluminiumsulfat und
(b3) ein Alkalimetallsulfat; und

(A2) Druckeinspritzen der Beschleunigermasse durch Druckluft, um sie mit einem Zementbeton zu mischen; und

(B) Spritzen des in Stufe (A) erhaltenen Spritzmaterials.

2. Verfahren nach Anspruch 1, worin der Zementbeton außerdem ein Polyalkylenoxid enthält.

3. Verfahren nach Anspruch 1 oder 2, worin das Spritzmaterial außerdem ein faserförmiges Material enthält.

4. Spritzmaterial, das einen ein Zement enthaltenden Zementbeton enthält, und eine Beschleunigermasse, die aufweist:

(a) 30 bis 600 Gew.-Teile Wasser und
(b) 100 Gew.-Teile eines Beschleunigungsmittels, das aufweist:

(b1) ein Calciumaluminat,
(b2) Aluminiumsulfat und
(b3) ein Alkalimetallsulfat.

**5.** Spritzmaterial nach Anspruch 4, worin der Zementbeton außerdem ein Polyalkylenoxid enthält.

**6.** Spritzmaterial nach Anspruch 4 oder 5, worin das Spritzmaterial außerdem ein faserförmiges Material enthält.

**7.** Spritzmaterial nach einem der Ansprüche 4 bis 6, worin das Alkalimetallsulfat in einer Menge von 10 bis 30 Gew. -Teilen pro 100 Gew.-Teile des Beschleunigungsmittels vorhanden ist.

**8.** Spritzmaterial nach einem der Ansprüche 4 bis 7, worin CaO/Al$_2$O$_3$ (Mol-Verhältnis) im Calciumaluminat 1,5 bis 3,0 beträgt.

**9.** Spritzmaterial nach einem der Ansprüche 4 bis 8, worin die Beschleunigermasse außerdem eine aromatische Sulfonsäure und/oder ein aromatisches Sulfonat/Formaldehyd-Kondensat enthält.

**10.** Spritzmaterial nach Anspruch 9, worin die Beschleunigermasse einen pH-Wert von weniger als 7 aufweist.

**11.** Spritzmaterial nach einem der Ansprüche 4 bis 10, worin das Calciumaluminat ein Vitrifikationsverhältnis von mindestens 40% aufweist.

**12.** Verwendung eines Beschleunigungsmittels, das aufweist:

(b1) ein Calciumaluminat,
(b2) Aluminiumsulfat und
(b3) ein Alkalimetallsulfat,

zur Herstellung des Spritzmaterials nach einem der Ansprüche 4 bis 11.

**Revendications**

**1.** Procédé de pulvérisation de béton, qui comprend les étapes consistant à :

(A) se munir d'un béton à prise rapide en tant que matériau de pulvérisation :

(A1) en préparant une suspension d'accélérateur en ajoutant

(a) de 30 en 600 parties de poids d'eau à
(b) 100 parties en poids d'un accélérateur comprenant :

(b1) un aluminate de calcium,
(b2) du sulfate d'aluminium, et
(b3) un sulfate de métal alcalin ; et

(A2) en soumettant la suspension d'accélérateur à une injection sous pression à l'aide d'air comprimé pour la mélanger avec un béton de ciment, et

(B) pulvériser le matériau de pulvérisation obtenu à l'étape (A).

**2.** Procédé selon la revendication 1, dans lequel le béton de ciment contient en outre un poly (oxyde d'alkylène).

**3.** Procédé selon la revendication 1 ou 2, dans lequel le matériau de pulvérisation contient en outre un matériau fibreux.

**4.** Matériau de pulvérisation qui comprend un béton de ciment contenant du ciment, et une suspension d'un accélérateur qui comprend :

(a) de 30 à 600 parties en poids d'eau et

(b) 100 parties en poids d'un accélérateur comprenant :

   (b1) un aluminate de calcium,
   (b2) du sulfate d'aluminium, et
   (b3) un sulfate de métal alcalin.

5.  Matériau de pulvérisation selon la revendication 4, dans lequel le béton de ciment contient en outre un poly (oxyde d'alkylène).

6.  Matériau de pulvérisation selon la revendication 4 ou 5, lequel contient en outre un matériau fibreux.

7.  Matériau de pulvérisation selon l'une quelconque des revendications 4 à 6, dans lequel le sulfate de métal alcalin est présent à raison de 10 à 30 parties en poids pour 100 parties en poids de l'accélérateur.

8.  Matériau de pulvérisation selon l'une quelconque des revendications 4 à 7, dans lequel $CaO/Al_2O_3$ (rapport molaire) dans l'aluminate de calcium est de 1,5 à 3,0.

9.  Matériau de pulvérisation selon l'une quelconque des revendications 4 à 8, dans lequel la suspension d'accélérateur contient en outre un acide sulfonique aromatique et/ou un produit de condensation de formaldéhyde et d'un sulfonate aromatique.

10. Matériau de pulvérisation selon la revendication 9, dans lequel la suspension d'accélérateur a un pH inférieur à 7.

11. Matériau de pulvérisation selon l'une quelconque des revendications 4 à 10, dans lequel l'aluminate de calcium a un taux de vitrification d'au moins 40 %.

12. Utilisation d'un accélérateur, comprenant :

   (b1) un aluminate de calcium,
   (b2) du sulfate d'aluminium, et
   (b3) un sulfate de métal alcalin

   pour la préparation du matériau de pulvérisation tel que défini dans l'une quelconque des revendications 4 à 11.